# EUROPEAN PATENT SPECIFICATION

(11) **EP 2 182 029 B1**
(45) Date of publication and mention of the grant of the patent: **16.05.2012**
(21) Application number: 07792873.7
(22) Date of filing: 22.08.2007
(51) Int. Cl.: C08L 21/00, C08J 7/00, C08K 3/04, C08K 5/00, C08L 101/00, C09J 11/06

(54) **ADHESIVE SHEET MATERIAL FOR AGING PREVENTION AND METHOD OF PREVENTING CROSSLINKED RUBBER FROM AGING**
ADHÄSIVES FLÄCHENMATERIAL ZUR VERHINDERUNG VON ALTERUNG UND VERFAHREN ZUR VERHINDERUNG DER ALTERUNG VON VERNETZTEM KAUTSCHUK
MATÉRIAU EN FEUILLE ADHÉSIF DESTINÉ À LA PRÉVENTION DU VIEILLISSEMENT ET PROCÉDÉ DE PRÉVENTION DU VIEILLISSEMENT D'UN CAOUTCHOUC RÉTICULÉ

(43) Date of publication of application: 05.05.2010
(73) Proprietor: The Yokohama Rubber Co., Ltd., Minato-ku Tokyo 105-8685 (JP)
(72) Inventor: IKAI, Kouichi, Kanagawa 254-8601 (JP); WAKABAYASHI, Masashi, Kanagawa 254-8601 (JP); MIYAJI, Jun, Kanagawa 254-8601 (JP)
(74) Representative: Vossius & Partner
(86) International application number: PCT/JP2007/066283
(87) International publication number: WO 2009/025044

(56) References cited:
- JP-A- 08 025 920
- JP-A- 10 324 779
- JP-A- 62 122 747
- JP-A- 63 199 634
- JP-A- 2004 161 139
- JP-A- 2005 059 834
- JP-A- 2007 224 166
- US-A- 4 461 795
- DATABASE WPI Week 200451 Thomson Scientific, London, GB; AN 2004-528052 XP002624839, & JP 2004 182915 A (SURION TEC KK) 2 July 2004 (2004-07-02)

## Description

### TECHNICAL FIELD

The present invention relates to an adhesive material for aging prevention and a method of preventing crosslinked rubber from aging.

### BACKGROUND ART

An antidegradant is added to rubber products used outdoors such as tires, hoses and fenders for the purpose of preventing them from being deteriorated by exposure to UV light, ozone or heat.
However, in cases where these rubber products are used outdoors for a long period of time, the antidegradant is consumed and reduced with time to deteriorate crosslinked rubber, as a result of which the crosslinked rubber will not be able to exhibit the required properties.

In order to solve such a problem, there have conventionally been proposed methods which involve applying a coating- or solvent-type composition for aging prevention to the surface of crosslinked rubber to form a film thereby preventing rubber products from being deteriorated.
An example of the coating- or solvent-type composition for aging prevention includes a coating composition for preventing aging of rubber materials which comprises a curable polyurethane and/or a curable silicone, and also comprises one or more than one antidegradant selected from the group consisting of aromatic amine derivatives, phenol derivatives, quinoline derivatives, dithiocarbamates and imidazoles in an amount of 0.1 wt% to 10 wt% (see Patent Document 1).

Patent Document 1: JP 6-172707 A

### DISCLOSURE OF THE INVENTION

### PROBLEMS TO BE SOLVED BY THE INVENTION

However, such a conventional coating- or solvent-type composition for aging prevention suffers from the following problems:
(A) when used on vertical surface, the composition runs down;
(B) the composition contains a solvent and may cause therefore damage to the surface or discoloration of a rubber product;
(C) the composition may cause environmental contamination;
(D) the composition is not suitable for use in an enclosed space;
(E) when the composition is used outdoors, a uniform coating cannot be formed under the influence of wind and rain; and
(F) the coating formed has a relatively small thickness and therefore the effect lasts only for a short period of time.

Accordingly, an object of the present invention is to provide an adhesive material for aging prevention having the following effects (a) to (g):
(a) the antidegradant is allowed to migrate to crosslinked rubber and the aging resistance of the crosslinked rubber can be restored;
(b) the adhesive material for aging prevention can also be used on surfaces other than horizontal surfaces (such as on vertical surfaces);
(c) the adhesive material for aging prevention does not cause damage to the surface or discoloration of a rubber product;
(d) there is no problem of environmental contamination;
(e) the adhesive material for aging prevention can also be used in an enclosed space;
(f) wind and rain hardly affect the adhesive material for aging prevention used outdoors; and
(g) aging resistance suitable for the state of a rubber product can be imparted thereto.

Another object of the present invention is to provide a method of preventing crosslinked-rubber aging which has the effects (a) to (g).

### MEANS FOR SOLVING THE PROBLEMS

The inventors of the present invention have found that an adhesive material for aging prevention comprising 100 parts by mass of at least one polymer ingredient selected from the group consisting of a rubber, a thermoplastic elastomer, and a resin and 5 to 50 parts by mass of an antidegradant has the effects (a) to (g).
The inventors of the present invention have also found that an adhesive material for aging prevention comprising at least one polymer ingredient selected from the group consisting of a rubber, a thermoplastic elastomer and a resin, and an antidegradant is applied to a crosslinked rubber to allow the antidegradant to migrate to the crosslinked rubber, whereby the effects (a) to (g) can be achieved to prevent the crosslinked rubber from aging.
The inventors have completed the present invention based on these findings.

Specifically, the present invention provides the following (1) to (10).
(1) An adhesive material for aging prevention comprising: 100 parts by mass of at least one polymer ingredient selected from the group consisting of a rubber, a thermoplastic elastomer and a resin; 5 to 50 parts by mass of an antidegradant; and carbon black
(2) The adhesive material for aging prevention according to (1), wherein the polymer ingredient has flexibility and adhesion properties.
(3) The adhesive material for aging prevention according to (1) or (2), wherein the antidegradant is at least one selected from the group consisting of phenol derivatives, aromatic amine derivatives, amine-ketone condensates, benzimidazole derivatives, dithiocarbamic acid derivatives and thiourea derivatives.
(4) The adhesive material for aging prevention according to any one of (1) to (3), further comprising up to 30 parts by mass of oil with respect to 100 parts by mass of the polymer ingredient.
(5) The adhesive material for aging prevention according to any one of (1) to (4), wherein the adhesive material for aging prevention is in sheet form.
(6) The adhesive material for aging prevention according to (5), wherein a back-up material is provided on one or both surfaces of the adhesive material for aging prevention which is in sheet form.
(7) A method of preventing crosslinked-rubber aging comprising: applying an adhesive material for aging prevention including at least one polymer ingredient selected from the group consisting of a rubber, a thermoplastic elastomer and a resin, and an antidegradant to a crosslinked rubber to allow the antidegradant to migrate to the crosslinked rubber, and thereby prevent the crosslinked rubber from aging.
(8) The method of preventing crosslinked-rubber aging according to (7), wherein the adhesive material for aging prevention is peeled off from the crosslinked rubber after the antidegradant has migrated to the crosslinked rubber.
(9) The method of preventing crosslinked-rubber aging according to (7) or (8), wherein the adhesive material for aging prevention is one according to any one of (1) to (6).

### EFFECTS OF THE INVENTION

The adhesive material for aging prevention and the method of preventing crosslinked-rubber aging according to the present invention have the following effects.
(a) the antidegradant is allowed to migrate to the crosslinked rubber and the aging resistance of the crosslinked rubber can be restored;
(b) the adhesive material for aging prevention can also be used on surfaces other than horizontal surfaces (such as on vertical surfaces);
(c) the adhesive material for aging prevention does not cause damage to the surface or discoloration of a rubber product;
(d) the adhesive material for aging prevention contains no solvent and hence has no problem of environmental contamination;
(e) the adhesive material for aging prevention contains no solvent and hence can also be used in an enclosed space;
(f) wind and rain hardly affect the adhesive material for aging prevention used outdoors; and
(g) aging resistance suitable for the state of a product can be imparted by thickness adjustment or replacement.

### BEST MODE FOR CARRYING OUT THE INVENTION

Next, the present invention is described in further detail.
The adhesive material for aging prevention according to the present invention (hereinafter referred to simply as the "adhesive material") includes 100 parts by mass of at least one polymer ingredient selected from the group consisting of a rubber, a thermoplastic elastomer and a resin, and 5 to 50 parts by mass of an antidegradant.

The polymer ingredient is not particularly limited as long as it is at least one selected from the group consisting of a rubber, a thermoplastic elastomer and a resin. However, the polymer ingredient preferably has flexibility and adhesion properties, and more preferably has a glass transition point of up to room temperature (25°C).

The rubber may be crosslinked rubber or non-crosslinked rubber but in general non-crosslinked rubber is preferred in terms of excellent flexibility and adhesion properties.
Examples of the non-crosslinked rubber include diene rubbers such as natural rubber (NR), isoprene rubber (IR), butadiene rubber (BR), 1,2-butadiene rubber, styrenebutadiene rubber (SBR), acrylonitrile-butadiene rubber (NBR), chloroprene rubber, butyl rubber (IIR), ethylene-propylene-diene rubber (EPDM) and hydrogenated products thereof; olefin rubbers such as ethylene-propylene rubber (EPM), ethylene-butene rubber (EBM), chlorosulfonated polyethylene, acrylic rubber, fluorocarbon rubber, polyethylene rubber and polypropylene rubber; epichlorohydrin rubber; silicone rubber; and urethane rubber. These may be used singly or in combination of two or more.
Of these, natural rubber and isoprene rubber are preferred in terms of high adhesion properties and good processability and physical properties.

Examples of the crosslinked rubber include those obtained by vulcanizing the non-crosslinked rubbers. Of these, natural rubber is preferred.

Specific examples of the thermoplastic elastomer include optionally hydrogenated polystyrene elastomeric polymers (for example, SBS, SIS, and SEBS), polyolefin elastomeric polymers, polyvinyl chloride elastomeric polymers, polyurethane elastomeric polymers, polyester elastomeric polymers, and polyamide elastomeric polymers. These may be used singly or in combination of two or more.

Specific examples of the resin include (meth)acrylic resins (including esters and vinyl copolymers), ABS resins, ethylene-vinyl acetate copolymers (EVA), polyvinyl chlorides, polyurethanes, polyesters, polyolefins, polyvinyl alcohols, and silicone resins. These may be used singly or in combination of two or more.

The molecular weight of the polymer ingredient is not particularly limited and may be appropriately set according to the flexibility required for the adhesive material.

The antidegradant that may be used in the present invention is not particularly limited and antidegradants used in conventionally known rubber compositions may be employed. Specific examples of the antidegradant that may be preferably used include a phenol derivative, an aromatic amine derivative, an amine-ketone condensate, a benzimidazole derivative, a dithiocarbamic acid derivative, and a thiourea derivative. These may be used singly or in combination of two or more.

Specific examples of the phenol derivative include styrenated phenol, 2,6-di-tert-butylphenol, 2,6-di-tert-butylcresol, 4,4'-butylidene-bis(3-methyl-6-tert-butylphenol), 4,4'-methylene-bis(2,6-di-tert-butylphenol), and 4,4'-thio-bis(6-tert-butyl-m-cresol).

Specific examples of the aromatic amine derivative include 4,4'-bis(α,α-dimethylbenzyl)diphenylamine, octylated diphenylamine, N,N'-diphenyl-p-phenylenediamine, N,N'-di-2-naphthyl-p-phenylenediamine, and N-(1,3-dimethylbutyl)-N'-phenyl-p-phenylenediamine.

Specific examples of the amine-ketone condensate include polymerized 2,2,4-trimethyl-1,2-dihydroquinoline, 6-ethoxy-1,2-dihydro-2,2,4-trimethylquinoline, and a reaction product of diphenylamine and acetone.

Specific examples of the benzimidazole derivative include 2-mercaptobenzimidazole, 2-mercaptomethylbenzimidazole, and a zinc salt of 2-mercaptobenzimidazole.

Specific examples of the dithiocarbamic acid derivative include nickel diethyldithiocarbamate and nickel dibutyldithiocarbamate.

Specific examples of the thiourea derivative include 1,3-bis(dimethylaminopropyl)-2-thiourea and tributylthiourea.

The antidegradant is incorporated in an amount of 5 to 50 parts by mass with respect to 100 parts by mass of the polymer ingredient. The content of the antidegradant in the adhesive material of the present invention is set considerably higher than that in common rubber products, so that there arises a difference in the concentration of the antidegradant between the adhesive material and the crosslinked rubber in cases where the adhesive material is closely attached to the crosslinked rubber. The antidegradant has the property of migrating to the lower-content area, so that at an antidegradant content within the above-defined range, the antidegradant can easily migrate from the adhesive material for aging prevention in the present invention to the crosslinked rubber, thus enabling the aging resistance of the rubber product itself to be restored.
The antidegradant is preferably incorporated in an amount of 5 to 30 parts by mass and more preferably 10 to 30 parts by mass with respect to 100 parts by mass of the polymer ingredient, because the antidegradant can migrate at a high rate and in a large amount and impart long-term aging resistance.

The adhesive material for aging prevention in the present invention preferably further contains up to 30 parts by mass of oil with respect to 100 parts by mass of the polymer ingredient. Inclusion of oil improves the flexibility of the adhesive material for aging prevention and also facilitates migration of the antidegradant to the crosslinked rubber.
There is no particular limitation on the type of oil and oils used for the softener in conventionally known rubber products may be employed. Specific examples thereof include petroleum oil, vegetable oil and synthetic oil. These may be used singly or in combination of two or more.

Specific examples of the petroleum oil include paraffinic oil, naphthenic oil and aromatic oil.

The oil is incorporated in an amount of up to 30 parts by mass, preferably 5 to 30 parts by mass, more preferably 5 to 20 parts by mass and even more preferably 5 to 15 parts by mass with respect to 100 parts by mass of the polymer ingredient in terms of the flexibility of the adhesive material for aging prevention and easy migration of the antidegradant to the crosslinked rubber.

The adhesive material for aging prevention of the prevent invention contains carbon black. Carbon black serves as a colorant or an extender. The antidegradant can be incorporated in a large amount in the adhesive material because carbon black can improve the dispersibility of the antidegradant.

Carbon black is preferably incorporated in an amount of 3 to 20 parts by mass and more preferably 3 to 10 parts by mass with respect to 100 parts by mass of the polymer.

In a preferred embodiment of the present invention, the adhesive material for aging prevention further contains a tackifier. Specific examples of the tackifier include aromatic hydrocarbon resins, saturated or unsaturated aliphatic hydrocarbon resins, terpene resins, and phenol modified or aromatic modified terpene resins.

The adhesive material for aging prevention in the present invention may optionally contain various additives such as fillers, pigments (dyes), plasticizers, flame retardants, dispersants, dehydrating agents, and antistatic agents as long as the objects of the present invention are not impaired.

There is no particular limitation on the form of the adhesive material for aging prevention in the present invention as long as it is not liquid and can be applied to crosslinked rubber. Exemplary forms include a sheet form (including a film form), a paste form and a pellet form. Of these, a sheet form is preferred.

The size and the thickness of the adhesive material for aging prevention in the present invention are not particularly limited and may be appropriately selected. The adhesive material for aging prevention in the present invention has a thickness of preferably 0.5 to 10 mm and more preferably 1 to 6 mm.

In a preferred embodiment, the adhesive material for aging prevention in sheet form has a back-up material provided on one or both surfaces thereof. The adhesive material for aging prevention is brought into contact with the crosslinked rubber on one surface of the adhesive material and has a back-up material on the other surface of the adhesive material which is opposite to the surface of the adhesive material to be brought into contact with the crosslinked rubber, so that deposition of the antidegradant on the surface of the adhesive material providing the back-up material can be suppressed to enable efficient migration of the antidegradant to the crosslinked rubber. The adhesive material does not stick to hands by providing the back-up material on one surface thereof, whereby the ease of application (workability) can be improved while also reinforcing the adhesive material.
In cases where the back-up material is provided on both surfaces of the adhesive material, deposition of the antidegradant on the surfaces of the adhesive material before use can be suppressed. In this case, the back-up material provided on one surface of the adhesive material can be peeled off to use the adhesive material.

Specific examples of the back-up material include plastic films, cloths, paper and fibers.

In the present invention, the adhesive material itself preferably has adhesion properties, but adhesive members such as a double faced tape and an adhesive may be used in part or the whole of the surface of the adhesive material in order to impart adhesion properties.

The method of producing the adhesive material of the present invention is not particularly limited, and for example a method may be used in which the respective ingredients (except the back-up material) are thoroughly kneaded in an agitator such as a Banbury mixer and the mixture is formed into a specified shape. The ingredients may optionally be heated upon kneading. The back-up material may optionally be adhered to the mixture after formed into a specified shape.

As described above, the adhesive material for aging prevention in the present invention allows the antidegradant to migrate to the crosslinked rubber, which may restore the aging resistance of the crosslinked rubber. The adhesive material for aging prevention does not run down and can also be used on surfaces other than horizontal surfaces (such as on vertical surfaces). The adhesive material does not use a solvent and therefore damage to the surface or discoloration of a rubber product does not occur. The adhesive material contains no solvent and therefore has no problem of environmental contamination and can be used even in an enclosed space. Wind and rain hardly affect the adhesive material used outdoors. Aging resistance suitable for the state of products can be imparted by adjusting the thickness of the adhesive material and the content of the antidegradant or replacing the adhesive material.

The method of preventing crosslinked-rubber aging according to the present invention (hereinafter referred to as the "aging prevention method of the present invention") is described below in detail.
The aging prevention method of the present invention includes: applying an adhesive material for aging prevention including at least one polymer ingredient selected from the group consisting of a rubber, a thermoplastic elastomer and a resin, an antidegradant, and carbon black to a crosslinked rubber to allow the antidegradant to migrate to the crosslinked rubber, and thereby prevent the crosslinked rubber from aging.

The polymer ingredients (rubber, thermoplastic elastomer and resin) and the antidegradant that may be used in the aging prevention method of the present invention are the same as those used in the above-described adhesive material for aging prevention in the present invention.
The above-described adhesive material for aging prevention in the present invention is preferably used in the aging prevention method of the present invention.

Examples of the crosslinked rubber to be prevented from aging in the aging prevention method of the present invention include diene rubbers crosslinked (vulcanized) with sulfur, and diene rubbers and non-diene rubbers crosslinked with peroxides.

The adhesive material is applied to a portion of the surface of the crosslinked rubber to be prevented from aging, or in the vicinity thereof. In cases where cracking occurs at the surface of the crosslinked rubber due to aging, the adhesive material in sheet form is applied to the surface of the crosslinked rubber so as to cover the cracked portion in order to suppress the progress of aging at that portion or to restore the aging resistance. The adhesive material in paste form may be filled into cracks to be closely attached thereto.

In a preferred embodiment of the aging prevention method of the present invention, an exemplary method involves applying the adhesive material for aging prevention in sheet form to the outer surface or inner surface of a device which is capable of expansion and contraction, expanding the device and applying the adhesive material for aging prevention to the crosslinked rubber with the former closely attached to the latter.
Examples of the device which is capable of expansion and contraction include balloons and pneumatic fenders. Balloons and pneumatic fenders are preferred, because they can be expanded or contracted by increasing or decreasing the internal pressure and are simple. According to this method, the adhesive material can be easily applied to portions such as inner surface of a hose which are not directly reached by hands.

In cases where the device is in a tubular shape or a doughnut shape, the adhesive material can be applied to the crosslinked rubber in a closely attached manner by applying the adhesive material to the inner surface of the device and expanding the device. This method can be advantageously used in, for example, rod-like rubber products such as cylindrical fenders.

The antidegradant begins to migrate from the adhesive material to the crosslinked rubber upon application of the adhesive material to the crosslinked rubber. During the application of the adhesive material to the crosslinked rubber, UV light and ozone are blocked by the adhesive material and cannot directly act on the product, whereby the service life-prolonging effect is achieved.

The adhesive material for aging prevention may remain applied to the crosslinked rubber but, from the viewpoint that the appearance is not impaired, a preferred method of use includes peeling off the adhesive material from the crosslinked rubber after the antidegradant has migrated to the crosslinked rubber.
The difference in the concentration of the antidegradant between the adhesive material and the surface of the crosslinked rubber, and the ambient temperature affect the rate of migration of the antidegradant and therefore the period of application time is appropriately set depending on the status of use. It is generally assumed that the antidegradant can fully migrate in cases where the adhesive material is applied at 50°C for 1 week.

As described above, the aging prevention method of the present invention allows the antidegradant to migrate to the crosslinked rubber, which may restore the aging resistance of the crosslinked rubber. The adhesive material for aging prevention does not run down and can also be used on surfaces other than horizontal surfaces (such as on vertical surfaces). The adhesive material does not use a solvent and therefore damage to the surface or discoloration of a rubber product does not occur. The adhesive material contains no solvent and therefore has no problem of environmental contamination and can be used even in an enclosed space. Wind and rain hardly affect the adhesive material used outdoors. Aging resistance suitable for the state of products can be imparted by adjusting the thickness of the adhesive material and the content of the antidegradant or replacing the adhesive material.

The adhesive material for aging prevention and the aging prevention method of the present invention can be applied to crosslinked rubber products without any particular limitation. In an application example in which tires are stacked on top of each other and stored, the surfaces of the tires can be prevented from aging by sandwiching the adhesive material for aging prevention in sheet form in the present invention between the adjacent tires.

### EXAMPLES

### <Experiment on Migration of Antidegradant>

### 1. Sample Preparation

### (Example 1)

One hundred parts by mass of non-crosslinked natural rubber, 5 parts by mass of an antidegradant (N-(1,3-dimethylbutyl)-N'-phenyl-p-phenylenediamine available from Flexsys), 3 parts by mass of oil (aromatic oil available from Showa Oil Co., Ltd.) and 5 parts by mass of carbon black (HTC#100 available from Nippon Steel Chemical Carbon Co., Ltd.) were charged into a Banbury mixer, thoroughly kneaded and formed into a sheet with a thickness of 4 mm to obtain an adhesive material for aging prevention.

### (Example 2)

Example 1 was repeated except that the amount of antidegradant added was changed to 10 parts by mass to thereby obtain an adhesive material for aging prevention in sheet form.

### (Comparative Example 1)

Methyl ethyl ketone and an antidegradant (N-(1,3-dimethylbutyl)-N'-phenyl-p-phenylenediamine available from Flexsys) were mixed at a mass ratio of 7/3 to obtain a composition for aging prevention.

### (Comparative Example 2)

A conventional solvent-type composition for aging prevention (SUPER Anti Crack available from The Yokohama Rubber Co., Ltd.) and an antidegradant (N-(1,3-dimethylbutyl)-N'-phenyl-p-phenylenediamine available from Flexsys) were mixed at a mass ratio of 9/1 to obtain a composition for aging prevention.

### (Comparative Example 3)

A modified rubber solvent (available from Nisseki Mitsubishi Co., Ltd.) was added to the adhesive material for aging prevention in sheet form in Example 2 at a mass ratio (of the adhesive material to the solvent) of 1/9. The mixture was thoroughly mixed to dissolve the adhesive material in the solvent to thereby obtain a composition for aging prevention.

The resulting adhesive materials for aging prevention in Examples 1 and 2 and compositions for aging prevention in Comparative Examples 1 to 3 were subjected to measurement of the amount of migration of the antidegradant to the crosslinked rubber (vulcanized rubber) according to the following method.

### 2. Migration Experiment

A sheet (150 × 100 × 2 mm) formed from a natural rubber for use in fenders (hereinafter referred to as "rubber sheet for fenders") was extracted with acetone to remove the compounding ingredients contained in the rubber sheet for fenders.
Then, in Examples 1 and 2, each adhesive material for aging prevention was applied to the surface of the rubber sheet for fenders from which the compounding ingredients had been removed. In Comparative Examples 1 to 3, each composition for aging prevention was applied once with a brush on the surface of the rubber sheet for fenders from which the compounding ingredients had been removed, thereby forming a film with a thickness of 0.2 mm. Then, each rubber sheet for fenders was heated in an oven at 50°C for 1 week.
Thereafter, the adhesive material for aging prevention or the composition for aging prevention was peeled off from the vulcanized rubber sheet. Two layers each having a thickness of 0.5 mm were sliced off from the side of the surface of the vulcanized rubber sheet (to which the adhesive material or the composition had been applied) to obtain a first-layer sample and a second-layer sample from the surface side.
The thus obtained first-layer and second-layer samples were extracted with 100 ml of acetone for 48 hours using a Soxhlet extractor (according to JIS K6229) to determine the ratio of the contents of the antidegradant and oil having migrated to the whole sample (amount of extraction into acetone).
Quantitative analysis of the antidegradant having migrated to the sample was performed by gas chromatography to determine the ratio of the content of the antidegradant to the whole sample (the amount of migration of the antidegradant).
The results are shown in Table 1.

[Table 1]

**Table 1**

| | Example 1 | Example 2 | Comparative Example 1 | Comparative Example 2 | Comparative Example 3 |
|---|---|---|---|---|---|
| Amount of migration of antidegradant (mass%) | | | | | |
| First layer | 2.26 | 4.13 | 0.57 | 0.32 | 0.01 |
| Second layer | 1.56 | 3.47 | 0.58 | 0.19 | 0.01 |
| Amount of extraction into acetone (mass%) | | | | | |
| First layer | 7.37 | 8.54 | 1.49 | 3.51 | 0.93 |
| Second layer | 5.74 | 7.07 | 1.71 | 1.33 | 1.22 |

As is clear from the results shown in Table 1, the adhesive materials for aging prevention in Examples 1 and 2 allowed the antidegradant to migrate in larger amounts than the compositions for aging prevention in Comparative Examples 1 to 3.

### <Evaluation of Aging Resistance>

### 1. Sample Preparation

### (Comparative Example 4)

A dumbbell specimen (JIS dumbbell No. 3) was blanked out from the rubber sheet for fenders (150 × 100 × 2 mm) and used as Sample 1.

### (Comparative Example 5)

A dumbbell specimen (JIS dumbbell No. 3) was blanked out from the rubber sheet for fenders (150 × 100 × 2 mm) from which the compounding ingredients had been removed by extraction with acetone, and used as Sample 2.

### (Example 3)

The adhesive material for aging prevention in Example 1 was applied to the surface of the rubber sheet for fenders (150 × 100 × 2 mm) from which the compounding ingredients had been removed by extraction with acetone and the rubber sheet was heated in a geer oven at 50°C for 1 week. Then, the adhesive material for aging prevention was peeled off from the rubber sheet, and a dumbbell specimen (JIS dumbbell No. 3) was blanked out from the rubber sheet and used as Sample 3.

### 2. Tensile Test

The tensile strength (T_{B}) [MPa] and the breaking elongation (E_{B}) [%] of Samples 1 to 3 were measured according to JIS K6251-2004.
Samples 1 to 3 were put in the geer oven at 80°C and aged for 120 hours or 240 hours, and the tensile strength (T_{B}) [MPa] and the breaking elongation (E_{B}) [%] of these samples were measured in the same manner.
From the obtained results, the tensile strength retention rate [100 × Tₛ after aging / T_{B} before aging (%)] and the breaking elongation retention rate [100 × E_{B} after aging / E_{B} before aging (%)] were determined.
The results are shown in Table 2.

[Table 2]

**Table 2**

| | Comparative Example 4 | Comparative Example 5 | Example 3 |
|---|---|---|---|
| | Sample 1 | Sample 2 | Sample 3 |
| Rate of retention of tensile strength (after 120 hours) (%) | 92 | 83 | 95 |
| Rate of retention of breaking elongation (after 120 hours) (%) | 77 | 77 | 84 |
| Rate of retention of tensile strength (after 240 hours) (%) | 84 | 75 | 87 |
| Rate of retention of breaking elongation (after 240 hours) (%) | 67 | 68 | 76 |

As is clear from the results shown in Table 2, Sample 2 (in Comparative Example 5) from which the antidegradant had been removed by extraction with acetone had a low retention rate due to a considerable decrease in the tensile strength after aging.
On the other hand, it has been revealed that in Sample 3 (of Example 3) in which the antidegradant was allowed to migrate to the rubber sheet by applying the inventive adhesive material for aging prevention to the rubber sheet (corresponding to Sample 2) from which the antidegradant had been removed by extraction with acetone, the tensile strength and breaking elongation after aging decrease less than in Comparative Example 5 and the aging resistance can be restored. The tensile strength retention rate and the breaking elongation retention rate were equivalent to or higher than those in Comparative Example 4 and it has been therefore revealed that products from which the aging resistance has been lost can have the aging resistance at a level equal to or higher than the initial level by using the inventive adhesive material for aging prevention, and that aging resistance suitable for the state of products such as fenders may be imparted thereto.

## Claims

1. An adhesive material for aging prevention comprising: 100 parts by mass of at least one polymer ingredient selected from the group consisting of a rubber, a thermoplastic elastomer and a resins; 5 to 50 parts by mass of an antidegradant; and carbon black.

2. The adhesive material for aging prevention according to claim 1, wherein the polymer ingredient has flexibility and adhesion properties.

3. The adhesive material for aging prevention according to claim 1 or 2, wherein the antidegradant is at least one selected from the group consisting of phenol derivatives, aromatic amine derivatives, amine-ketone condensates, benzimidazole derivatives, dithiocarbamic acid derivatives and thiourea derivatives.

4. The adhesive material for aging prevention according to any one of claims 1 to 3, further comprising up to 30 parts by mass of oil with respect to 100 parts by mass of the polymer ingredient.

5. The adhesive material for aging prevention according to any one of claims 1 to 4, wherein the amount of the carbon black is of 3 to 20 parts by mass with respect 100 parts by mass of the polymer.

6. The adhesive material for aging prevention according to any one of claims 1 to 5, wherein the adhesive material for aging prevention is in sheet form.

7. The adhesive material for aging prevention according to claim 6, wherein a back-up material is provided on one or both surfaces of the adhesive material for aging prevention which is in sheet form.

8. A method of preventing crosslinked-rubber aging comprising: applying an adhesive material for aging prevention including at least one polymer ingredient selected from the group consisting of a rubber, a thermoplastic elastomer and a resin, an antidegradant, and carbon black to a crosslinked rubber to allow the antidegradant to migrate to the crosslinked rubber, and thereby prevent the crosslinked rubber from aging.

9. The method of preventing crosslinked-rubber aging according to claim 8, wherein the adhesive material for aging prevention is peeled off from the crosslinked rubber after the antidegradant has migrated to the crosslinked rubber.

10. The method of preventing crosslinked-rubber aging according to claim 8 or 9, wherein the adhesive material for aging prevention is one according to any one of claims 1 to 7.

## Patentansprüche

1. Ein adhäsives Material zur Verhinderung von Alterung, umfassend:
100 Massenteile von mindestens einem Polymerbestandteil, ausgewählt aus der Gruppe bestehend aus Kautschuk, einem thermoplastischen Elastomer und einem Harz; 5 bis 50 Massenteile eines Konservierungsstoffs; und Ruß.

2. Das adhäsive Material zur Verhinderung von Alterung gemäß Anspruch 1, wobei der Polymerbestandteil Elastizitäts- und Klebeeigenschaften aufweist.

3. Das adhäsive Material zur Verhinderung von Alterung gemäß Anspruch 1 oder 2, wobei der Konservierungsstoff mindestens einer, ausgewählt aus der Gruppe bestehend aus Phenolderivaten, aromatischen Aminderivaten, Amin-Keton-Kondensaten, Benzimidazolderivaten, Dithiocarbaminsäurederivaten und Thioharnstoffderivaten ist.

4. Das adhäsive Material zur Verhinderung von Alterung gemäß einem der Ansprüche 1 bis 3, weiterhin umfassend bis zu 30 Massenteile an Öl, in Bezug auf 100 Massenteile des Polymerbestandteils.

5. Das adhäsive Material zur Verhinderung von Alterung gemäß einem der Ansprüche 1 bis 4, wobei die Menge an Ruß 3 bis 20 Massenteile in Bezug auf 100 Massenteile des Polymers beträgt.

6. Das adhäsive Material zur Verhinderung von Alterung gemäß einem der Ansprüche 1 bis 5, wobei das adhäsive Material zur Verhinderung von Alterung in Flächenform vorliegt.

7. Das adhäsive Material zur Verhinderung von Alterung gemäß Anspruch 6, wobei ein unterstützendes Material an einer oder beiden Oberflächen des adhäsiven Materials zur Verhinderung von Alterung, welches in Flächenform vorliegt, bereitgestellt ist.

8. Ein Verfahren zur Verhinderung der Alterung von vernetztem Kautschuk, umfassend:
Aufbringen eines adhäsiven Materials zur Verhinderung von Alterung, enthaltend mindestens einen Polymerbestandteil, ausgewählt aus der Gruppe bestehend aus einem Kautschuk, einem thermoplastischen Elastomer und einem Harz, einem Konservierungsstoff und Ruß, auf einen vernetzten Kautschuk, um dem Konservierungsstoff die Migration in den vernetzten Kautschuk zu ermöglichen und dadurch Alterung des vernetzten Kautschuks zu verhindern.

9. Das Verfahren zur Verhinderung der Alterung von vernetztem Kautschuk gemäß Anspruch 8, wobei das adhäsive Material zur Verhinderung von Alterung von dem vernetzten Kautschuk abgezogen wird, nachdem der Konservierungsstoff in den vernetzten Kautschuk migriert ist.

10. Das Verfahren zur Verhinderung der Alterung von vernetztem Kautschuk gemäß Anspruch 8 oder 9, wobei das adhäsive Material zur Verhinderung von Alterung eines gemäß einem der Ansprüche 1 bis 7 ist.

## Revendications

1. Matériau adhésif destiné à la prévention du vieillissement comprenant: 100 parties en masse d'au moins un ingrédient polymère sélectionné dans le groupe consistant en un caoutchouc, un élastomère thermoplastique et une résine; 5 à 50 parties en masse d'un antidégradant; et de noir de carbone.

2. Matériau adhésif pour la prévention du vieillissement selon la revendication 1, où l'ingrédient polymère a des propriétés de flexibilité et d'adhésion.

3. Matériau adhésif pour la prévention du vieillissement selon la revendication 1 ou 2, où l'antidégradant est au moins un sélectionné dans le groupe consistant en dérivés phénoliques, dérivés d'amine aromatique, condensats d'amine-cétone, dérivés de benzimidazole, dérivés d'acide dithiocarbamique et dérivés de thiourée.

4. Matériau adhésif pour la prévention du vieillissement selon l'une quelconque des revendications 1 à 3, comprenant en outre jusqu'à 30 parties en masse d'huile par rapport à 100 parties en masse de l'ingrédient polymère.

5. Matériau adhésif pour la prévention du vieillissement selon l'une quelconque des revendications 1 à 4, où la quantité du noir de carbone est de 3 à 20 parties en masse par rapport à 100 parties en masse du polymère.

6. Matériau adhésif pour la prévention du vieillissement selon l'une quelconque des revendications 1 à 5, où le matériau adhésif pour la prévention du vieillissement est sous forme de feuille.

7. Matériau adhésif pour la prévention du vieillissement selon la revendication 6, où un matériau de support est prévu sur une ou les deux surfaces du matériau adhésif pour la prévention du vieillissement qui est sous forme de feuille.

8. Procédé de prévention d'un vieillissement de caoutchouc réticulé comprenant: appliquer un matériau adhésif pour la prévention du vieillissement incluant au moins un ingrédient de polymère sélectionné dans le groupe consistant en un caoutchouc, un élastomère thermoplastique et une résine, un anti-dégradant et du noir de carbone, à un caoutchouc réticulé pour permettre à l'anti-dégradant de migrer vers le caoutchouc réticulé, et pour prévenir ainsi le vieillissement du caoutchouc réticulé.

9. Procédé de prévention du vieillissement d'un caoutchouc réticulé selon la revendication 8, où le matériau adhésif pour la prévention du vieillissement est décollé du caoutchouc réticulé après que l'anti-dégradant a migré au caoutchouc réticulé.

10. Procédé de prévention du vieillissement d'un caoutchouc réticulé selon la revendication 8 ou 9, dans lequel le matériau adhésif pour la prévention du vieillissement est un selon l'une quelconque des revendications 1 à 7.
